# EUROPÄISCHE PATENTSCHRIFT

(11) **EP 3 726 106 B1**
(45) Veröffentlichungstag und Bekanntmachung des Hinweises auf die Patenterteilung: **16.11.2022**
(21) Anmeldenummer: 19169918.0
(22) Anmeldetag: 17.04.2019
(51) Int. Cl.: F16K 1/22, F16K 1/226, F16K 27/02

(54) **ABSPERRARMATUR**
SHUT-OFF FITTING
ROBINETTERIE D'ARRÊT

(43) Veröffentlichungstag der Anmeldung: 21.10.2020
(73) Patentinhaber: Peter Skiba Kunststoff GmbH, 38259 Salzgitter-Bad (DE)
(72) Erfinder: Skiba, Florian, 38259 Salzgitter-Bad (DE)
(74) Vertreter: Gramm, Lins & Partner Patent- und Rechtsanwälte PartGmbB

(56) Entgegenhaltungen:
- CN-A- 107 355 548
- CN-U- 201 827 394
- CN-U- 202 493 692
- DE-A1- 10 031 450
- US-A- 4 335 748
- US-A1- 2017 328 477

## Beschreibung

Die Erfindung betrifft eine Absperrarmatur mit einem Gehäuse, dessen Innenwandung einen im Querschnitt runden Durchflusskanal ausbildet, und einer im Durchflusskanal angeordneten zylindrischen Absperrklappe, die mittels einer Stelleinrichtung von einer geschlossenen Stellung, in der die Absperrklappe umfangsseitig an mindestens einer in der Innenwandung vorgesehenen umlaufend geschlossenen Dichtkante abgedichtet anliegt, in eine geöffnete Stellung verschwenkbar ist.

Eine solche Absperrarmatur ist beispielsweise aus der CN 107355548 A bekannt. Diese Absperrarmatur ist für große Durchmesser und hohe Drücke vorgesehen. Hierzu wird die Absperrklappe aus zwei parallel angeordneten Metallplatten gebildet, die über quer hierzu verlaufende Führungsplatten auf Abstand zueinander gehalten werden. Die Abdichtung zwischen der schweren Abdichtklappe und der Rohrwandung erfolgt über zwei Metallringe. Die Absperrarmatur ist für den Einsatz beispielsweise in der Lebensmittelindustrie nicht geeignet, weil sie viel zu groß und kompliziert aufgebaut ist.

Die US 2017/0328477 A1 offenbart eine Absperrarmatur mit einem T-förmigen Gehäuse, über die zwei entgegengesetzt verlaufende Wege für das über den Anschluss in die Armatur gelangende Fluid geschaltet werden können. Hierzu ist zentral in der die entgegengesetzten Wege bildenden Leitung eine nicht zylindrische Absperrklappe eingesetzt, die jeweils um 45° in entgegensetzte Richtungen verschwenkbar ist und so die unterschiedlichen Wege freigibt.

Andere Absperrarmaturen sind beispielsweise aus der US 4,335,748 A, der CN 202493692 U, der DE 100 31 450 A1 und der CN 2018-27394 U bekannt.

Absperrarmaturen mit kleineren Abmessungen sind beispielsweise aus der DE 195 24 622 A1 oder der DE 2 244 552 A bekannt.

Solche Absperrarmaturen können ein einstückiges Gehäuse aufweisen, in das der Durchflusskanal eingearbeitet ist oder aus einem zweiteiligen Gehäuse bestehen, wobei die beiden Gehäusehälften dann zu einer Einheit verschraubt werden. In den Durchflusskanal wird üblicherweise ein Dichtring eingesetzt, der über die Innenwandung in den Durchflusskanal hineinragt und mit einer umlaufenden Dichtkante versehen ist, sodass die Absperrklappe in der geschlossenen Stellung gegenüber dem Gehäuse abgedichtet ist. Derartige Absperrarmaturen werden üblicherweise in der Lebensmittelindustrie an großen Gebinden für Flüssigkeiten, beispielsweise Flüssigei oder Pizzabelag oder dergleichen verwendet und dienen als Zapfstelle. Die Stelleinrichtung wird üblicherweise von Hand betätigt. Es ist daher gewünscht, dass zur Verschwenkung der Absperrklappe ein niedriges Drehmoment notwendig ist, dabei muss aber eine ausreichende Dichtigkeit gewährleistet sein. Um die Dichtigkeit zu gewährleisten sind zwischen Dichtung und Absperrscheibe entsprechende Übermaße vorgesehen. Kritisch an der Abdichtung sind die Bereiche, in denen die Stelleinrichtung durch die Dichtung hindurchgeführt ist, weil dort die Dichtkante unterbrochen ist. Außerdem ist die Montage bzw. die Herstellung der Absperrarmatur aufwendig. So muss zunächst die Dichtung in das Gehäuse eingesetzt werden, wobei die Abdichtung zum Gehäuse sichergestellt sein muss. Beim Einsetzen der Absperrklappe muss dann sorgfältig gearbeitet werden, um die Dichtung nicht zu beschädigen. Um den Zusammenbau zu vereinfachen ist vielfach vorgesehen, dass das Gehäuse als Spritzgussteil aus Kunststoff ausgebildet wird und um die Dichtung herumgespritzt wird. Das bringt entsprechend hohe Werkzeugkosten mit sich, wobei das Problem der Abdichtung zwischen Absperrklappe und Dichtkante im Bereich der Durchtrittstellen für die Stelleinrichtung nicht beseitigt wird.

Von dieser Problematik ausgehend soll die gattungsgemäße Absperrarmatur in ihrem Aufbau deutlich vereinfacht werden, sodass sie kostengünstig herstellbar ist, insbesondere in der Lebensmittelindustrie Verwendung finden kann und die Sicherheit der Abdichtung verbessert wird.

Zur Problemlösung zeichnet sich eine gattungsgemäße Absperrarmatur dadurch aus, dass das Gehäuse und die Absperrklappe aus Kunststoff bestehen und die Absperrklappe zweiteilig ausgebildet ist und einen Kern aufweist, der mit einem elastischen Dichtungsmaterial umgeben ist.

Durch diese Ausgestaltung wird die Dichtung als separates Bauteil eliminiert. Die Herstellung und die Montage der Absperrarmatur werden dadurch vereinfacht. Durch die in der Innenwandung vorgesehene geschlossene Dichtkante kann die umfangsseitige Abdichtung neben der Durchtrittsstelle für die Stelleinrichtung, vorzugsweise in Strömungsrichtung davor, erfolgen. Die Dichtfläche kann klein gehalten werden, sodass niedrige Stellkräfte notwendig sind, um die Absperrarmatur zu verschließen. Eine solche Absperrarmatur eignet sich besonders gut als Aseptik-Ventil für die Lebensmittelindustrie.

Vorzugsweise sind in der Innenwandung zwei umlaufende geschlossene Dichtkanten zueinander parallel beabstandet angeordnet. Die Abdichtung kann dann vor und hinter der Durchtrittsstelle der Stelleinrichtung erfolgen.

Die Stelleinrichtung wird vorzugsweise gebildet durch eine im Gehäuse gelagerte Stellachse, die diametral durch die Absperrklappe geführt und zumindest über eine Bohrung einseitig aus dem Gehäuse herausragt. Diese Bohrung ist dann vorzugsweise zwischen den beiden Kanten angeordnet.

Die Absperrklappe ist zweiteilig ausgebildet und weist einen Kern auf, der mit dem Dichtungsmaterial umgeben ist. Der Kern besteht aus Kunststoff und kann mit dem Dichtungsmaterial, das ein Elastomer, vorzugsweise Silikon, ist umspritzt werden.

Der Kern weist vorzugsweise eine zentrale Buchse zur Aufnahme der Stellachse auf, wodurch die Montage der Absperrarmatur vereinfacht wird. Die Absperrscheibe kann dann leicht in den Durchflusskanal eingesetzt werden und die Stellachse wird dann durch das Gehäuse und die zentrale Buchse hindurchgesteckt, sodass die Absperrklappe dann in ihrer Position fixiert ist.

Mit Hilfe einer Zeichnung soll ein Ausführungsbeispiel der Erfindung nachfolgend näher beschrieben werden. Es zeigen:

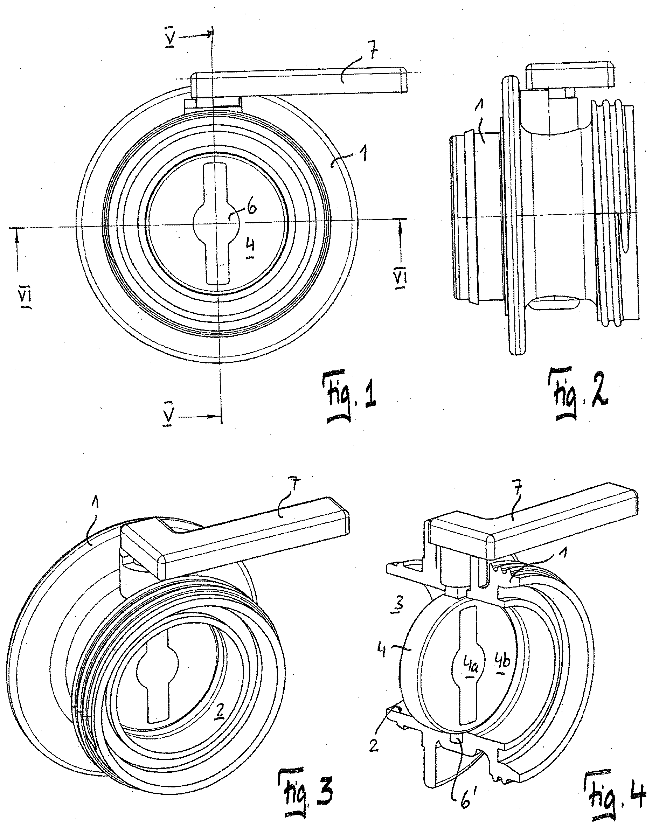

- Figur 1 -: die Vorderansicht einer Absperrarmatur;
- Figur 2 -: die Seitenansicht der Absperrarmatur nach Figur 1;
- Figur 3 -: eine perspektivische Darstellung der Absperrarmatur;
- Figur 4 -: eine perspektivische Schnittdarstellung der Absperrarmatur;
- Figur 5 -: den Schnitt entlang der Linie V-V nach Figur 1;
- Figur 6 -: den Schnitt entlang der Linie VI-VI nach Figur 1,
- Figur 7 -: eine Absperrarmatur nach dem Stand der Technik im Schnitt.

Die Absperrarmatur besteht aus Kunststoff und ist im Spritzguss hergestellt. Sie umfasst das Gehäuse 1, dessen Innenwandung 2 einen im Querschnitt runden Durchflusskanal 3 ausbildet, und der im Durchflusskanal 3 schwenkbar angeordneten zylindrische Absperrklappe 4, die über eine Stelleinrichtung 5 von einer geschlossenen in eine geöffnete Stellung verschwenkbar ist. Die Stelleinrichtung 5 besteht aus der Stellachse 6 und dem mit der Stellachse 6 verbundenen Schwenkhebel 7. Die Absperrklappe 4 besteht aus dem Kern 4a, der mit einem Elastomer, vorzugsweise Silikon umspritzt ist, das die Dichtung 4b ausbildet.

Die Stellachse 6 ist mit ihrem einen Ende 6' in einem Sackloch im Gehäuse 1 gelagert. Mit ihrem gegenüberliegenden Ende 6" ist sie in einem Sackloch im Schwenkhebel 7 gelagert, der wiederum mit seiner äußeren Umfangsfläche in einer im Gehäuse 1 vorgesehenen Bohrung 8 gelagert ist. Zur Ausbildung einer Buchse, die die Stellachse 6 aufnimmt, ist der Kern 4a durchbohrt.

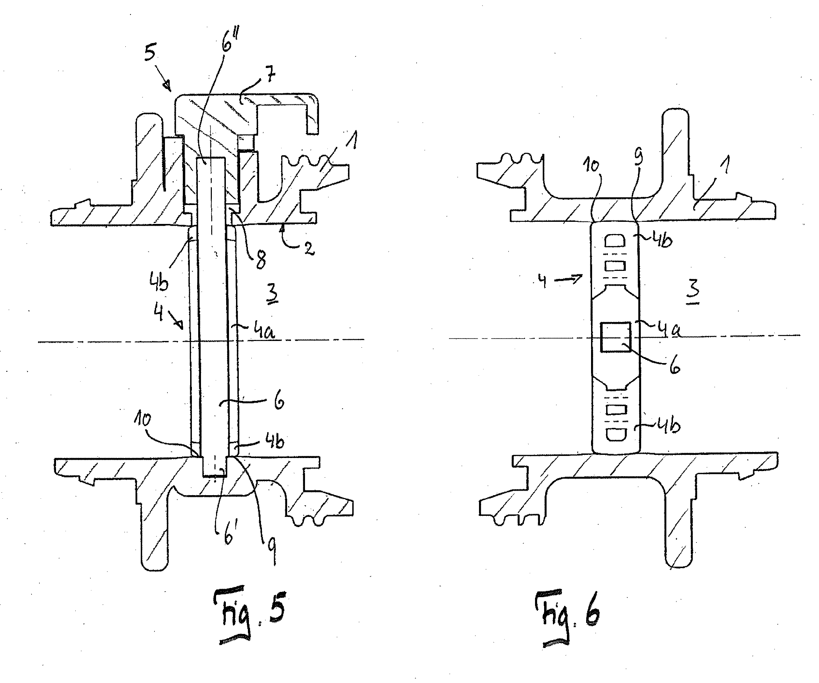

Wie Figur 5 zeigt ist in Strömungsrichtung vor und hinter der Stellachse 6 je eine umlaufende Dichtkante 9, 10 in der Innenwandung 2 des Gehäuses 1 ausgebildet, die in den Durchflusskanal 3 hineinragen und an denen die Dichtung 4b anliegt, sodass die Absperrklappe 4 in ihrer geschlossenen Stellung gegenüber dem Gehäuse 1 abgedichtet ist. Dadurch, dass vor und hinter der Stellachse 6 eine umlaufend geschlossene Abdichtung möglich ist, die nicht von der Stellachse 6 unterbrochen wird, ist die Absperrarmatur sehr funktionssicher. Die Dichtflächen, die durch die umlaufenden Dichtkanten 9, 10 eingestellt werde, können klein gehalten werden, um geringe Stellkräfte zu realisieren oder entsprechend vergrößert werden, wenn entsprechend hohe Drücke abgedichtet werden müssen.

Eine kostengünstige Herstellung der Absperrarmatur wird erreicht, wenn alle Teile aus Kunststoff bestehen. Aus Festigkeitsgründen besteht die Stellachse 6 aus Metall. Denkbar ist es, die Stellachse 6 und den Schwenkhebel 7 einstückig auszubilden.

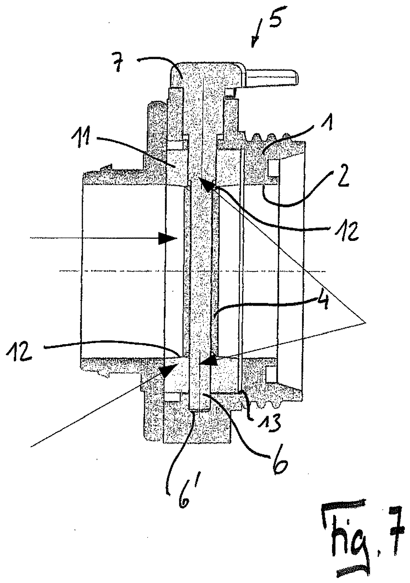

Figur 7 zeigt eine Absperrarmatur nach dem Stand der Technik in einem der Figur 5 entsprechenden Schnitt. Die aus Weichsilikon bestehende Dichtung 11 ist in einer Umfangsnut 13 in das Gehäuse 1 eingesetzt. Nach radial innen steht an der Dichtung 11 eine umlaufende Dichtlippe 12 hervor, die an den diametralen Bohrungen in der Dichtung, durch die die Stellachse 6 hindurchgeführt ist, unterbrochen wird. An diesen Stellen können Dichtungsprobleme auftreten.

### Bezugszeichenliste

- 1: Gehäuse
- 2: Innenwandung
- 3: Durchflusskanal
- 4: Absperrklappe
- 4a: Kern
- 4b: Dichtung
- 5: Stelleinrichtung
- 6: Stellachse
- 6': Ende
- 6": Ende
- 7: Schwenkhebel
- 8: Bohrung
- 9: Dichtkante
- 10: Dichtkante
- 11: Dichtung
- 12: Dichtlippe
- 13: Umfangsnut

## Patentansprüche

1. Absperrarmatur mit einem Gehäuse (1), dessen Innenwandung (2) einen im Querschnitt runden Durchflusskanal (3) ausbildet, und einer im Durchflusskanal (3) angeordneten zylindrischen Absperrklappe (4), die mittels einer Stelleinrichtung (5) von einer geschlossenen Stellung, in der die Absperrklappe (4) umfangsseitig an mindestens einer in der Innenwandung (2) vorgesehenen umlaufend geschlossenen Dichtkante (9, 10) abgedichtet anliegt, in eine geöffnete Stellung verschwenkbar ist, **dadurch gekennzeichnet, dass** das Gehäuse (1) und die Absperrklappe (4) aus Kunststoff bestehen und die Absperrklappe (4) zweiteilig ausgebildet ist und einen Kern (4a) aufweist, der mit einem elastischen Dichtungsmaterial (4b) umgeben ist.

2. Absperrarmatur nach Anspruch 1, **dadurch gekennzeichnet, dass** in der Innenwandung (2) zwei umlaufend geschlossene Dichtkanten (9, 10) zueinander parallel beabstandet angeordnet sind.

3. Absperrarmatur nach Anspruch 1 oder 2, **dadurch gekennzeichnet, dass** die Stelleinrichtung (5) gebildet wird durch eine im Gehäuse (1) gelagerte Stellachse (6), die diametral durch die Absperrklappe (4) geführt ist und zumindest über eine Bohrung (8) einseitig aus dem Gehäuse (2) herausragt.

4. Absperrarmatur nach Ansprüchen 2 und 3, **dadurch gekennzeichnet, dass** die Bohrung (8) zwischen den Dichtkanten (9, 10) angeordnet ist.

5. Absperrarmatur nach Anspruch 1, **dadurch gekennzeichnet, dass** der Kern (4a) eine zentrale Buchse zur Aufnahme der Stellachse (6) aufweist.

6. Absperrarmatur nach einem der vorstehenden Ansprüche, **dadurch gekennzeichnet, dass** der Kunststoff Silikon ist.

7. Absperrarmatur nach Anspruch 1, **dadurch gekennzeichnet, dass** der Kern (4a) mit dem Dichtungsmaterial (4b) umspritzt ist.

8. Absperrarmatur nach einem der vorstehenden Ansprüche, **dadurch gekennzeichnet, dass** das Dichtungsmaterial ein Elastomer, insbesondere Silikon ist.

## Claims

1. A shut-off valve with a housing (1), the inner wall (2) of which forms a flow channel (3) with a round cross-section, and a cylindrical butterfly valve (4) arranged in the flow channel (3), wherein said butterfly valve can be pivoted by means of an adjusting device (5) out of a closed position, in which the butterfly valve (4) is in circumferentially sealed contact with at least one circumferentially closed sealing edge (9, 10) provided in the inner wall (2), into an open position, **characterised in that** the housing (1) and the butterfly valve (4) are made of plastic and the butterfly valve (4) is designed in two pieces and comprises a core (4a), which is surrounded by an elastic sealing material (4b).

2. The shut-off valve according to claim 1, **characterised in that** two circumferentially closed sealing edges (9, 10) are arranged parallel to each other and spaced apart in the inner wall (2).

3. The shut-off valve according to claim 1 or 2, **characterised in that** the adjustment device (5) is formed by an adjustment axle (6) mounted in the housing (1), said axle being guided diametrically through the butterfly valve (4) and protruding from one side of the housing (2) at least via a bore (8).

4. The shut-off valve according to claims 2 and 3, **characterised in that** the bore (8) is arranged between the sealing edges (9, 10).

5. The shut-off valve according to claim 1, **characterised in that** the core (4a) comprises a central bushing for receiving the adjustment axle (6).

6. The shut-off valve according to one of the preceding claims, **characterised in that** the plastic is silicone.

7. The shut-off valve according to claim 1, **characterised in that** the core (4a) is over-moulded with the sealing material (4b).

8. The shut-off valve according to one of the preceding claims, **characterised in that** the sealing material is an elastomer, particularly silicone.

## Revendications

1. Robinet d'arrêt comportant un carter (1) dont la paroi intérieure (2) forme un canal d'écoulement (3) de section transversale ronde, et un clapet d'arrêt (4) cylindrique qui est disposé dans le canal d'écoulement (3) et qui est mobile en pivotement, au moyen d'un dispositif de réglage (5), d'une position fermée dans laquelle le clapet d'arrêt (4) s'applique du côté périphérie de manière étanche contre au moins une arête d'étanchéité (9, 10) fermée sur le pourtour, prévue dans la paroi intérieure (2), jusque dans une position ouverte,
**caractérisé en ce que** le carter (1) et le clapet d'arrêt (4) sont en matière plastique, et le clapet d'arrêt (4) est réalisé en deux parties et présente un cœur (4a) qui est entouré d'un matériau d'étanchéité élastique.

2. Robinet d'arrêt selon la revendication 1,
**caractérisé en ce que** deux arêtes d'étanchéité (9, 10) fermées sur le pourtour sont disposées parallèlement à distance l'une de l'autre dans la paroi intérieure (2).

3. Robinet d'arrêt selon la revendication 1 ou 2,
**caractérisé en ce que** le dispositif de réglage (5) est formé par un axe de réglage (6) logé dans le carter (1), qui est mené diamétralement à travers le clapet d'arrêt (4) et qui dépasse d'un côté hors du carter (2) au moins par un alésage (8).

4. Robinet d'arrêt selon les revendications 2 et 3,
**caractérisé en ce que** l'alésage (8) est disposé entre les arêtes d'étanchéité (9, 10).

5. Robinet d'arrêt selon la revendication 1,
**caractérisé en ce que** le cœur (4a) comporte une douille centrale destinée à recevoir l'axe de réglage (6).

6. Robinet d'arrêt selon l'une des revendications précédentes,
**caractérisé en ce que** la matière plastique est de la silicone.

7. Robinet d'arrêt selon la revendication 1,
**caractérisé en ce que** le cœur (4a) est surmoulé avec le matériau d'étanchéité (4b).

8. Robinet d'arrêt selon l'une des revendications précédentes,
**caractérisé en ce que** le matériau d'étanchéité est un élastomère, en particulier de la silicone.
